# EUROPÄISCHE PATENTANMELDUNG

(11) **EP 4 579 628 A1**
(43) Veröffentlichungstag der Anmeldung: **02.07.2025**
(21) Anmeldenummer: 24216819.3
(22) Anmeldetag: 02.12.2024
(51) Int. Cl.: G08G 1/0965

(54) **WARNSYSTEM ZUM WARNEN EINES FAHRZEUGFÜHRERS UND VERFAHREN ZUM WARNEN EINES FAHRZEUGFÜHRERS**

(30) Priorität: 27.12.2023 DE 102023136726
(71) Anmelder: MEKRA Lang GmbH & Co. KG, 91465 Ergersheim (DE)
(72) Erfinder: Enz, Andreas, 91593 Burgbernheim (DE)
(74) Vertreter: Alpspitz IP

(57) **Zusammenfassung**

Ein Warnsystem (100) zum Warnen eines Fahrzeugführers, enthält einen Sensor (3a, 3b) zum Erfassen von Umgebungsinformation; eine Verarbeitungseinheit (4) zum Verarbeiten einer von dem Sensor erfassten Information; und eine Wiedergabeeinheit (5, 7, 8, 9) zum Ausgeben eines Warnsignals an den Fahrzeugführer (1); wobei der Sensor (3a, 3b) angepasst ist, Information über andere Verkehrsteilnehmer zu erfassen; die Verarbeitungseinheit (4) angepasst ist, die Information im Hinblick auf das Vorhandensein von einer oder mehreren bestimmten Eigenschaften der anderen Verkehrsteilnehmer zu analysieren, und ein Signal an die Wiedergabeeinheit (5) zum Ausgeben des Warnsignals auszugeben, wenn die Analyse das Vorliegen von bestimmten Eigenschaften anderer Verkehrsteilnehmer erkennt.

## Beschreibung

### Gebiet der Erfindung

Die Erfindung betrifft ein Warnsystem zum Warnen eines Fahrzeugführers und ein Verfahren zum Warnen eines Fahrzeugführers, insbesondere wenn andere Verkehrsteilnehmer, denen Vorrang zu gewähren ist, insbesondere weil sie Sonderrechte in bestimmten Verkehrssituationen haben, sich in der Umgebung des Fahrzeugs befinden.

### Stand der Technik

Bei Fahrzeugen wird die Fahrzeugumgebung gewöhnlicherweise visuell überwacht, indem dem Fahrzeugführer Spiegel, oder zunehmend Kamera-Monitor-Systeme als Spiegelersatzsysteme oder als Ergänzung zu Spiegeln, bereitgestellt werden, mit denen der Fahrzeugführer die Fahrzeugumgebung in Bereichen einsehen kann, auf die sein Blick bei normaler Fahrt nicht direkt gerichtet ist.

Einsatzfahrzeuge, wie z.B. Polizei- oder Rettungsfahrzeuge, haben zu ihrer schnelleren Erkennbarkeit und Identifizierbarkeit durch die Fahrzeugführer Einrichtungen zum Aussenden von Lichtsignalen (in Deutschland z.B. meist blinkendes Blaulicht), die dann eingeschaltet und benutzt werden, wenn sich das Einsatzfahrzeug im Einsatz befindet und ihm damit im Straßenverkehr Vorrang zu gewähren ist, d.h. das Fahrzeug Sonderrechte in einer bestimmten Verkehrssituation hat. Das Licht ist dabei von einer derartigen Frequenz und Abfolge von Lichtblitzen, dass es weithin sichtbar und erkennbar ist. Ferner sind die Einsatzfahrzeuge in der Regel auch mit Sirenen (z.B. dem sog. Martinshorn in Deutschland) versehen, welche zumindest in besonders verkehrskritischen Situationen Tonsignale aussenden, damit die Fahrzeugführer in der Umgebung der Einsatzfahrzeuge diese zuverlässig wahrnehmen und entsprechend ihnen Vorrang gewähren können. Neben der visuellen Warnung wird somit auch noch eine akustische Warnung gegeben. Durch solche Einrichtungen an den Einsatzfahrzeugen soll sichergestellt werden, dass die Einsatzfahrzeuge zuverlässig Vorrang bekommen und damit zügig ihren Einsatz durchführen können, ohne dass die Verkehrssicherheit im Allgemeinen beeinträchtigt wird. Damit ein Fahrzeugführer zumindest Töne, Tonfolgen, Licht, Lichtfolgen und ähnliches möglichst eindeutig solchen Einsatzfahrzeugen zuordnen kann, ist zumindest für andere Verkehrsteilnehmer die Verwendung von entsprechenden Lichtern oder Tönen durch Straßenverkehrsvorschriften häufig untersagt, z.B. ist in Deutschland die Verwendung von blauem, gelben oder rotem Blinklicht an einem Verkehrsteilnehmer Einsatzfahrzeugen vorbehalten.

Damit der Fahrzeugführer frühzeitig einen anderen Verkehrsteilnehmer mit Sonderrechten erkennt, ist es essentiell, dass der Fahrzeugführer stets zuverlässig die Umgebung seines Fahrzeugs, z.B. durch Verwendung der Rückspiegel oder entsprechender Kamera-Monitor-Systeme, beobachtet, damit er beispielsweise sich von hinten nähernde Fahrzeuge frühzeitig wahrnimmt. Nur dadurch kann gewährleistet werden, dass er zuverlässig sinnvolle und/oder geforderte, der Verkehrssituation angepasste Maßnahmen ergreift, um den Einsatzfahrzeugen Vorrang zu gewähren, wie z.B. eine Rettungsgasse zu bilden oder am Straßenrand anzuhalten.

Bei Kamera-Monitor-Systemen ist es bekannt, dem Fahrzeugführer über den Monitor Zusatzinformation bereitzustellen. Solche Zusatzinformation kann fahrzeugbezogene Zusatzinformation sein, wie es beispielsweise in der noch nicht veröffentlichten DE 10 2023 106 451 beschrieben ist, oder es kann Zusatzinformation im Hinblick auf die Umgebung sein, wie es z.B. in der DE 10 2015 002 923 beschrieben ist.

Unter dem Begriff Verkehrsteilnehmer wird die Gesamtheit aller Fahrzeuge und Personen, die am Straßenverkehr teilnimmt, verstanden, z.B. sind Einsatzfahrzeuge, Transporter, Pkw, Lastwagen, Fahrräder, Roller, Fußgänger etc. Verkehrsteilnehmer. Unter Fahrzeugführer wird eine natürliche Person verstanden, die ein Fahrzeug führt. Ein Fahrzeugführer an sich ist somit nicht als Verkehrsteilnehmer zu verstehen; vielmehr ist sein Fahrzeug (mit ihm als Fahrzeugführer) der Verkehrsteilnehmer.

### Aufgabe der Erfindung

Oftmals ist es für den Fahrzeugführer schwierig, zeitig Information zu erfassen, die ihm angibt, dass ein Einsatzfahrzeug in der Umgebung seines Fahrzeugs sich befindet, insbesondere wenn der Fahrzeugführer z.B. wegen der vorliegenden Verkehrssituation sehr stark auf diese konzentriert ist.

Daher besteht ein Bedarf, einen Fahrzeugführerzusätzlich zu warnen, wenn sich ein Einsatzfahrzeug in der Umgebung seines Fahrzeugs befindet, und ein entsprechendes Warnsystem und -verfahren dafür bereitzustellen.

### Darstellung der Erfindung

Diese Aufgabe wird mit einem Warnsystem mit den Merkmalen des Anspruchs 1 und mit einem Verfahren mit den Merkmalen des Anspruchs 11 gelöst. Bevorzugte Ausführungsformen sind in den abhängigen Ansprüchen angegeben.

Der Erfindung liegt der Gedanke zu Grunde, Umgebungsinformation nicht nur zu erfassen und ggf. in bestimmte Kategorien, wie z.B. andere Verkehrsteilnehmer, Hindernisse etc. zu kategorisieren, sondern vielmehr für bestimmte Kategorien von Verkehrsteilnehmern die erfasste Umgebungsinformation nach weiteren Kriterien zu analysieren und dann, in Abhängigkeit vom Ergebnis der Analyse, Maßnahmen zu ergreifen bzw. zu veranlassen. Dabei muss ein System gemäß der Erfindung an sich nicht zwangsläufig die Zuordnung von Verkehrsteilnehmern zu bestimmten Gruppen oder Kategorien vornehmen, was z.B. mittels Bilderkennung und künstlicher Intelligenz möglich ist. Wenn im Vorfeld bestimmte Kriterien definiert werden können, die eindeutige Rückschlüsse oder im Wesentlichen eindeutige Rückschlüsse darauf zulassen, dass es sich sowohl um bestimmte Verkehrsteilnehmer handelt, als auch, dass bestimmte Situationen, in denen diese spezielle Eigenschaften aufweisen, gegeben sind, kann die Kategorisierung implizit dadurch erfolgen, dass gezielt diese speziellen Eigenschaften erfasst werden, die dann sowohl den Rückschluss, dass es sich um eine bestimmte Gruppe von Verkehrsteilnehmern handelt, also auch den Rückschluss, dass der Verkehrsteilnehmer gerade bestimmte Eigenschaften hat, zulassen. Beispiele für solche eindeutige Kriterien können das Vorliegen von Signalen sein, die von Halogenleuchten ausgehen, die sich in einem blauen Gehäuse befinden und einen deutlichen IR-Anteil haben. Ein anderes Beispiel sind LED-Blaulicht und Xenon-Lichtquellen ("Xenonblitzer"), die sehr kurze Lichtpulse aussenden. Diese Beispiele lassen den Rückschluss zu, dass es sich um ein Einsatzfahrzeug handelt, das sich im Einsatz befindet und das Signallicht angeschaltet hat. Insbesondere kann eine solche Analyse dahingehend stattfinden, dass im Hinblick auf eine Eigenschaft oder eine Kombination von Eigenschaften analysiert wird, die eindeutig auf einen Verkehrsteilnehmer mit einer bestimmten Eigenschaft, z.B. Einsatzfahrzeug mit eingeschaltetem Signallicht, schließen lassen.

Anschließend kann, wenn das Vorliegen einer solchen Eigenschaft erfasst wird, gezielt eine Warnung an den Fahrzeugführer und/oder ein entsprechendes Signal an ein Fahrerassistenzsystem ausgegeben werden.

Eine Möglichkeit ist, zunächst zu erfassen und zu analysieren, ob in der Fahrzeugumgebung überhaupt andere Verkehrsteilnehmer vorhanden sind, und, wenn ein anderer Verkehrsteilnehmer, erfasst wird, zu analysieren, ob diese Umgebungsinformation, insbesondere der andere Verkehrsteilnehmer, eine oder mehrere bestimmte Eigenschaften aufweist. Dadurch dass das Warnsystem eine Überprüfung auf das Vorhandensein eines anderen Verkehrsteilnehmers durchführt und dessen Eigenschaften näher analysiert, können fehlerhafte Warnungen, die zum Beispiel durch entsprechende Licht- oder Tonquellen abseits des Straßenverkehrs ausgelöst werden, minimiert werden.

Insbesondere enthält ein Warnsystem zum Warnen eines Fahrzeugführers einen Sensor, der Umgebungsinformation erfasst. Ein solcher Sensor kann von jeder geeigneten Bauart von Sensor sein, z.B. eine Kamera, um visuelle Signale zu erfassen, ein Mikrofon, um Tonsignale zu empfangen, ein Funkempfänger, um Funksignale zu erfassen, oder ähnliches. Grundsätzlich können beliebig viele Sensoren gleicher oder unterschiedlicher Bauart und/oder Typs vorgesehen sein, die sich gegenseitig ergänzend oder redundant Umgebungsinformation erfassen können. Die von dem Sensor erfasste Information wird einer Verarbeitungseinheit zugeführt, d.h. eine Verarbeitungseinheit ist vorgesehen, welche die vom Sensor erfasste Information verarbeitet und analysiert. Ferner enthält das Warnsystem eine Wiedergabeeinheit, die angepasst ist, ein Warnsignal an den Fahrzeugführer auszugeben. Dabei ist es auch möglich, dass die Verarbeitungseinheit das Signal zusätzlich oder alternativ an ein Fahrerassistenzsystem eines Fahrzeugs ausgibt, welches wiederum geeignete Maßnahme ergreift, und damit z.B. den Fahrzeugführer indirekt warnt oder das Fahrzeug beeinflusst. Zusätzlich könnte das Fahrerassistenzsystem auch eine direkte Warnung ausgeben. Das Fahrerassistenzsystem kann auch als Verarbeitungseinheit dienen, d.h. ein Fahrerassistenzsystem bildet eine Verarbeitungseinten. Bevorzugt wird das Signal zumindest an eine Wiedergabeeinheit ausgegeben. Die Wiedergabeeinheit kann von unterschiedlichem Typ sein, z.B. ein Lautsprecher, zum Ausgeben eines Tonsignals, ein Display zum Darstellen von visueller Warninformation oder ähnliches. Im Fahrzeug vorhandene Wiedergabeeinheiten, wie z.B. Monitore eines Spiegelersatz Kamera-Monitor-Systems können verwendet werden. Ferner können Kombinationen von verschiedenen Typen von Wiedergabeeinheiten verwendet werden, die entweder speziell für das Warnsystem vorgesehen sind, oder, bevorzugt, Komponenten eines Spiegelersatzsystems, eines Fahrzeugassistenz- oder Fahrzeugunterhaltungssystems sind.

Der Sensor ist angepasst, Information über andere Verkehrsteilnehmer zu erfassen. D.h. der Sensor ist geeignet, solche Umgebungsinformation zu erfassen, die Information über andere Verkehrsteilnehmer beinhaltet. Unter Umgebungsinformation ist dabei jedwede Art von Information zu verstehen, die ein menschliches Organ und/oder ein Gerät aus der Umgebung wahrnehmen oder gewinnen kann. Das Warnsystem wandelt die Umgebungsinformation in verarbeitbare Daten um und führt die von dem Sensor erfasste Information der Verarbeitungseinheit zu, welche die Information bzw. die daraus gewonnenen Daten im Hinblick darauf analysiert und kategorisiert, ob in der Umgebungsinformation Information über spezielle Eigenschaften anderer Verkehrsteilnehmer vorhanden ist. Wenn z.B. eine Information vorhanden ist, dass ein anderer Verkehrsteilnehmer sich in der Fahrzeugumgebung befindet, analysiert die Verarbeitungseinheit diese Information weiter im Hinblick darauf, ob eine oder mehrere bestimmten Eigenschaften der anderen Verkehrsteilnehmer vorliegen. Ein anderes Beispiel ist, dass die Umgebungsinformation ausschließlich daraufhin analysiert wird, dass eine bestimmte Eigenschaft, die ausschließlich einem speziellen anderen Verkehrsteilnehmer zugeordnet werden kann, vorliegt. In diesem Fall kann die Analyse auch dann erfolgreich sein, wenn das Fahrzeug an sich vom Sensor nicht gesehen wird.

Insbesondere können solche Eigenschaften, auf deren Vorliegen die Umgebungsinformation analysiert wird, auf die Erkennung von Sondersignalen abzielen, d.h, von solchen Signalen, die der Warnung anderer Verkehrsteilnehmer durch Einsatzfahrzeuge mittels Lichtzeichen und Tonsignalen dienen, um vor Gefahren zu warnen, und/oder dem übrigen Verkehr die Inanspruchnahme von Sonder- und Wegerechten anzuzeigen. Solche Sondersignale sind z.B. - je nach Land - blaue, rote und/oder gelbe Blinklichter sowie Sirenen (wie Yelp- oder Wail-Signale) und/oder Folgetonhörner ("Martinshorn"). Entsprechend können die zu ermittelnden Eigenschaften zum Beispiel Lichtwellen einer bestimmten Wellenlänge (entsprechend der Spektralfarbe von Licht, d.h. der vom der menschlichen Farbwahrnehmung erkannten Farbe), IR- oder UV Anteile von Licht, bei Bildanalyse z.B. RGB Werte eines erfassten Bildes, zeitlich bestimmte Abfolgen von Lichtwellen verschiedener Wellenlänge, bei Bildanalyse zeitliche Abfolgen von RGB Werten des Lichts und deren Intensität, bestimmte Töne (Tonfrequenzen), zeitlich bestimmte Abfolgen von Tonfrequenzen, Dopplereffekte oder -verschiebungen oder ein spezielles Funksignal sein. Werden Tonfrequenzverschiebungen, die auf Grund von Dopplereffekten entstehen, erfasst und ermittelt, so kann aus diesen auch Rückschluss auf die relative Bewegung der Tonquelle zum Fahrzeug geschlossen werden. Dadurch kann auch beispielsweise darauf geschlossen werden, ob sich die Tonquelle selbst bewegt oder nicht. Ähnliches kann auch durch Analyse der Lautstärke von Tonsignalen erfolgen.

Wenn die Analyse der Verarbeitungseinheit ergibt, dass eine oder mehrere bestimmte Eigenschaften der anderen Verkehrsteilnehmer bzw. eines anderen Verkehrsteilnehmers in der mittels des Sensors beobachteten Fahrzeugumgebung vorliegen, gibt die Verarbeitungseinheit an die Wiedergabeeinheit ein Signal aus, damit diese das Warnsignal ausgeben kann, z.B. in Form eines Warntons, des Reduzierens der Lautstärke eines Unterhaltungssystems (Radio), eines ggf. blinkenden Rahmens um eine Anzeigeeinheit, einer Hervorhebung des Verkehrsteilnehmers, z.B. in Form eines grafischen Overlays, auf einer Anzeigeeinheit oder ähnlichem. Alternativ und/oder zusätzlich kann die Verarbeitungseinheit das Signal auch an ein Fahrerassistenzsystem des Fahrzeugs geben, damit diese entsprechende Maßnahmen, wie langsame Fahrt, Anhalten etc. ergreifen kann.

Durch diese zusätzliche Warnung des Fahrzeugführers, die neben der ohnehin vorhandenen direkten Wahrnehmung der Signale von z.B. Einsatzfahrzeugen erfolgt, d.h. neben dem Sehen z.B. des blinkenden Blaulichts durch den Fahrzeugführer oder des Hörens eines Martinshorns, kann dadurch der Fahrzeugführer bereits frühzeitig und zuverlässig zusätzlich gewarnt werden, wenn sich ein Einsatzfahrzeug in der Umgebung seines Fahrzeugs befindet. Damit kann der Fahrzeugführer und/oder ein Fahrerassistenzsystem geeignete Maßnahmen ergreifen, um ein reibungsloses Vorankommen des Einsatzfahrzeugs zu gewährleisten. Dadurch wird gleichzeitig die Verkehrssicherheit erhöht, da der Fahrzeugführer frühzeitig und überlegt solche Maßnahmen ergreifen kann.

Die Analyse, ob ein Verkehrsteilnehmer mit bestimmten Eigenschaften in der Fahrzeugumgebung vorhanden ist, erfolgt, wenn der Sensor ein optischer Sensor ist, vorzugsweise auf Basis einer Kombination von verschiedenen Bildparametern, vorzugsweise ohne Objekterkennung auf dem Bild. Zum Beispiel kann ein Blaulicht als zeitliche Änderung in der Helligkeit der Farbwerte des Bilds erkannt werden, insbesondere kann zum einen die Helligkeit einzelner RGB-Pixel vor der Umrechnung in einen Farbwert des Bildes oder nach der Umrechnung verwendet werden, wobei der Helligkeitswert nach der Umrechnung eine Art Mittelwert darstellt. Zur Identifizierung eines Blaulichts wird zum Beispiel der zeitliche Helligkeitsverlauf als ein relevantes Merkmal verwendet, indem der Helligkeitsverlauf über mehrere Frames (Einzelbilder) beobachtet wird, um eine Frequenz der Helligkeitsänderung zu bestimmen. Wenn diese mit einer (bekannten) Frequenz eines gewöhnlichen Blaulichts übereinstimmt, wird im Beispiel auf das Vorliegen einer bestimmten Eigenschaft eines anderen Verkehrsteilnehmers erkannt. Zusätzlich kann zum Beispiel über einen Farbwinkel-Bereich ein blaues Licht als Blaulicht "mit dem richtigen Blau" erkannt werden. Dies ist insbesondere dann relevant, wenn das Licht direkt in die Kamera fällt. Fällt nur das von einem Objekt (beispielsweise einer Häuserwand) reflektierte Licht in die Kamera, muss eine ggf. stark von der eigentlichen Farbe der Signalleuchte abweichende Farbwahrnehmung berücksichtig werden (insbesondere, wenn es sich um keine spiegelnde Oberfläche wie beispielsweise Fenster anderer Fahrzeuge handelt, da diese dann von der Farbe des Objektes abhängig sein wird). Hier kann die Analyse weitestgehend auf der erkannten Helligkeitsveränderung beruhen. Zusätzlich oder alternativ kann die Anzahl der Pixel, in der die periodische Helligkeitsänderung wahrgenommen wird, bei der Analyse mit einbezogen werden. Dies beruht auf dem bekannten, sehr großen Abstrahlwinkel von Blaulichtern bzw. deren Gestaltung, dass sie in einem großen Raumbereich sichtbar sind. Daher sind Blaulichter bezogen auf das Bild bzw. die Bildsensoren eher in einem größeren Pixelbereich, der sich über große Teile des Sensors erstreckt, sichtbar und erkennbar und seltener in Einzelpixeln zu finden, anders als beispielsweise Leuchtanzeigen am Straßenrand.

Vorzugsweise ist das Warnsystem mit einem Spiegelersatzsystem eines Fahrzeugs gekoppelt und die Wiedergabeeinheit des Warnsystems ist bzw. enthält das Display, das zum Anzeigen der Spiegelersatzinformation für den Fahrzeugführer genutzt wird. Das Spiegelersatzsystem kann jedes Kamera-Monitor-System sein, das einen Spiegel am Fahrzeug ersetzen kann, d.h. das eine Einrichtung zur indirekten Sicht für einen Fahrzeugführer vorsieht, mit dem dieser in Bereiche der Fahrzeugumgebung Einblick gewinnt, die andernfalls nicht oder nur erschwert eingesehen werden können. Die Warninformation wird dann auf diesem Display visuell für den Fahrzeugführer dargestellt. Dadurch werden einerseits keine zusätzlichen Komponenten benötigt und andererseits ist der Fahrzeugführer gewohnt, über ein solches Display Umgebungsinformation zu erhalten, so dass er diese dort frühzeitig wahrnehmen wird.

Besonders bevorzugt enthält das Warnsignal eine grafische Darstellung auf dem Display, z.B. in Form von einem Overlay, das z.B. eine Hervorhebung des anderen Verkehrsteilnehmers, ein Rahmen um diesen oder ähnliches sein kann. Damit kann dem Fahrzeugführer gleichzeitig Ortsinformation, wo sich der beobachtete Verkehrsteilnehmer in Bezug zu seinem Fahrzeug befindet, gegeben werden. Besonders bevorzugt ist es, wenn auf dem Display das Bild eines Spiegelersatzsystems, z.B. ein gesetzliches Sichtfeld der UN/ECE-R46, zum Beispiel das Sichtfeld der Gruppen II und IV, dargestellt wird, und die Warninformation, zusammen mit der Ortsinformation über den anderen Verkehrsteilnehmer, in einem Bereich der Darstellung angezeigt wird, in dem ein gesetzliches Sichtfeld vorhanden ist.

In einer bevorzugten Ausführungsform wird das Warnsignal ausgegeben, solange das Vorliegen der bestimmten Eigenschaft oder Eigenschaften anderer Verkehrsteilnehmer erkannt wird oder bis der Fahrzeugführer das Warnsignal abschaltet. Damit kann sichergestellt werden, dass der Fahrzeugführer die Ausgabe des Warnsignals nicht verpasst, z.B. weil er zu Beginn der Ausgabe des Warnsignals auf den Verkehr konzentriert ist und somit nicht auf z.B. das Display schaut. Alternativ kann zum Beispiel das Wahrnehme des Warnsignals durch den Fahrzeugführer auch dadurch ermittelt werden, dass ein Fahrzeugführer-Monitoring-System (Drivermonitoringsystem) ermittelt, dass der Fahrzeugführer das Warnsignal wahrgenommen hat. Wenn dies der Fall ist, kann das Warnsignal anschließend vom Fahrzeugführer-Monitoring-System abgeschaltet werden.

Alternativ kann das Warnsignal für eine bestimmte, im Voraus festgelegte Zeitdauer ausgegeben werden.

Vorzugsweise wird das Warnsignal erst nach Ablauf einer Zeitdauer ausgegeben, während welcher das Vorliegen der bestimmten Eigenschaft oder Eigenschaften durchgängig erkannt wird. Dies bedeutet, dass der Sensor wiederholt, kontinuierlich die Umgebungsinformation erfasst und die Verarbeitungseinheit diese analysiert. Erst wenn kontinuierlich, während einer bestimmten Zeitdauer, z.B. 1 bis 3 Sekunden, das Vorliegen der bestimmten Eigenschaft eines anderen Verkehrsteilnehmers erkannt wird, wird ein Warnsignal ausgegeben. Damit kann vermieden werden, dass z.B. ein Einsatzfahrzeug, das hinter dem Fahrzeug quert und damit keine Handlung durch den Fahrzeugführer erfordert, zu einem unnötigen Warnsignal führt. Andererseits ist z.B. bei einem Einsatzfahrzeug, das sich von hinten dem Fahrzeug nähert, sichergestellt, dass ein Warnsignal ausgegeben wird, da in diesem Fall die bestimmte Eigenschaft während einer bestimmten Zeitdauer durchgängig gegeben ist. Durchgängig bedeutet dabei nicht unbedingt vollkommen ununterbrochen, so dass z.B. bestimmte Muster von Frequenzen oder Wellenlängen, d.h. wiederkehrendes Auftreten in kurzen Zeiträumen der beobachteten Eigenschaft, ebenfalls unter den Begriff "durchgängig" fallen.

Die Zeitdauer, ab der das Warnsignal ausgegeben wird, kann insbesondere von der technischen Spezifikation von einem oder von mehreren Sensoren abhängen, die verwendet werden, um kontinuierlich die Umgebungsinformation zu erfassen. Bei der Verwendung einer Kamera, die einen optischen Sensor aufweist, beispielsweise als eine Vorrichtung, die die Umgebungsinformation erfasst, kann die Zeitdauer beispielsweise von der Bildwiederholungsrate der Kamera abhängen. Werden mehrere Sensoren/ Kameras mit unterschiedlichen technischen Spezifikationen verwendet, hängt die Zeitdauer im Wesentlichen beispielsweise von dem Sensor bzw. der Kamera ab, der oder die die langsamsten Abtastrate/Bildwiederholungsrate hat. Einfluss auf die Zeitdauer haben aber auch andere Komponenten, die bei der Verarbeitung der erfassten Umgebungsinformation beteiligt sind. Beispielsweise kann die Zeitdauer davon abhängen, wie schnell die Verarbeitungseinheit die Information analysieren kann. Verschiedene Signallaufzeiten und mögliche Latenzen im Gesamtsystem können die Zeitdauer beeinflussen.

Ein Sensor zum Erfassen der Umgebungsinformation kann separat vorgesehen sein oder Teil des oben genannten Spiegelersatzsystems bzw. Kamera-Monitor-Systems sein. Im Falle einer Kamera kann das Warnsignal beispielsweise nach einer Zeitdauer von mindestens zwei Bildwiederholungen (Frames) bis hin zu wenigen Bildwiederholungen, beispielsweise 3 bis 5 Frames ausgegeben werden. Abhängig von der verwendeten Kamera kann dies dann einer Zeitdauer von 30 ms bis 175 ms (bei Systemen mit typischerweise 30-60 fps) entsprechend, ab wann das Warnsignal ausgegeben wird. Dadurch können fehlerhafte Warnungen des Fahrers vermieden werden.

Die Zeitdauer bis zur tatsächlichen Ausgabe des Warnsignals kann gemäß der Erfindung auch beispielsweise abhängen von einer Kombination aus wenigen Sekunden und wenigen Bildwiederholungsraten. Dies kann beispielsweise der Fall sein, wenn mehrere unterschiedliche Sensoren verwendet werden, also beispielsweise optische Sensoren und akustische Sensoren. Optische Sensoren und akustische Sensoren können ein Merkmal mit einem unterschiedlichen "Confidence-Level" erkennen, also mit unterschiedlicher Bestimmtheit (Sicherheit). Das Merkmal muss dabei nicht von allen Sensoren erkannt werden. Es reicht vielmehr aus, wenn es mit ausreichender Sicherheit bereits von einem oder mehreren Sensoren erkannt worden ist. Wenn beispielsweise ein optischer Sensor ein "Confidence-Level" von 90% hat, also zu 90% sicher das Merkmal erkannt wird, dann kann das Warnsignal ausgegeben werden, ohne dass auf eine Bestätigung durch einen akustischen Sensor gewartet werden muss. Bei einem niedrigen "Confidence-Level", beispielsweise unter 90% kann es notwendig sein auf das Ergebnis des akustischen Sensors zu warten, bevor das Warnsignal ausgegeben wird.

Zusätzlich oder alternativ kann die Zeitdauer bis zur Ausgabe des Warnsignals von dem erkannten Merkmal abhängen. Eine Frequenzabfolge (beispielsweise die typische Charakteristik eines Martinshorns) muss gegebenenfalls länger erkannt werden, um eine fehlerhafte Warnung zu vermeiden, als ein durchgängiges Merkmal, bei dem nur einmal erkannt werden muss, ob es vorhanden ist bzw. nur erkannt werden muss, ob es im nächsten Frame noch vorhanden ist, im Falle einer Kamera als Sensor. Bei Frequenzabfolgen muss die Zeitdauer daher mindestens zwei Periodendauern der Frequenzabfolge betragen, vorzugsweise vier bis fünf oder noch mehr Periodenlängen, um eine fehlerfreie Ausgabe des Warnsignals zu gewährleisten. Dabei ist die Zeitdauer auch im Kontext der zur Verfügung stehenden Abtastrate zu sehen, diese ist mindestens die Bildwiederholungsrate (fps) bzw. die mögliche Belichtungszeit (Aufnahmezeit) des verwendeten Bildsensors der Kamera. Speziell muss die Zeitdauer bei einer akustischen Frequenzabfolge (wenn man die Frequenzabfolge als typische Charakteristik eines Martinshorns annimmt) im Allgemeinen deutlich höher sein als bei optischen Signalen, so dass die Zeitdauer bis zur Ausgabe des Warnsignals ganz allgemein von der Art des Signals abhängt.

Schließlich kann die Dauer der Ausgabe eines Warnsignals und/oder der Beginn der Ausgabe und/oder das Ende davon abhängig von anderen Informationen erfolgen, die durch das Fahrzeug erfasst werden, z.B. in Abhängigkeit vom Erkennen des Vorliegens einer bestimmten Verkehrssituation und/oder Umgebungssituation. Solche Verkehrs- und/oder Umgebungsinformation kann z.B. durch Auswertung von aktuellen Eigenschaften des Fahrzeugs (Information beispielsweise über CAN-Bus) ermittelt werden. So kann es z.B. je nach Verkehrssituation sinnvoll sein, dass die Warnung so lange auszugeben, solange die Eigenschaft erkannt wird, die Warnung länger auszugeben oder eine Warnung kürzer, d.h. nicht während der gesamten Dauer des Erkennens der bestimmten Eigenschaft, auszugeben. Beispielsweise ist eine längere Warnung dann sinnvoll, wenn die Verkehrssituation oder Umgebungsinformation nahelegt, dass die bestimmte Eigenschaft nur intermittierend erkannt werden kann, z.B. weil das Fahrzeug auf kurviger Straße mit lichtundurchlässiger Begrenzung (beispielsweise Bäume, Berghang) fährt und daher beispielsweise ein Blaulicht nur kurzfristig gesehen wird und dann wieder verdeckt wird, ggf. mehrfach. Der Fahrzeugführer kann mit einer länger andauernden Warnung, als das Signal erfasst wird, dauerhaft darauf aufmerksam gemacht werden, dass sich ein Verkehrsteilnehmer, dem Vorrang zu gewähren ist nähert. Andererseits kann z.B. in Stausituationen auf der Autobahn (Fahrzeug steht oder fährt sehr langsam und befindet sich auf der Autobahn), in denen der Fahrzeugführer schon mit möglichem Blaulicht rechnet und damit die Aufmerksamkeit bereits erhöht ist, dem Fahrzeugführer eine zeitlich begrenzte, eher kurze Warnung ausgegeben werden, damit der Fahrzeugführer bei gegebenenfalls nötigen anschließenden Rangiervorgängen, in denen er einem Einsatzfahrzeug ausweichen muss, nicht unter zusätzlich erhöhten Stress gesetzt wird, die eine dauerhafte Warnung gegebenenfalls erzeugen kann.

Das Warnsignal ist vorzugsweise ein akustisches Signal und/oder ein visuelles Signal. Damit kann der Fahrzeugführer mittels zumeist ohnehin im Fahrzeug befindlicher Einrichtungen zuverlässig gewarnt werden, d.h. es ist keine Zusatzeinrichtung erforderlich.

Beispiele für visuelle grafische Warnsignale können leuchtende oder blinkende Signalleuchten, die speziell vorgesehen sind, aufleuchtende oder blinkende grafische Symbole auf einem bereits im Fahrzeug vorhandenen Display, z.B. einem Head-up Display, oder ähnliches sein. Leuchtende oder blinkende Rahmen um ein ganzes Display, oder Hervorhebungen von einzelnen Verkehrsteilnehmern auf einem Display eines Kamera-Monitor-Systems eines Spiegelersatzsystems sind weitere Beispiele für visuelle Warnsignale.

Akustische Warnsignale können zum Beispiel Warntöne aus einem Fahrzeuglautsprecher, Verringerung der Lautstärke eines Unterhaltungssystems oder ähnliches sein.

Weitere Warnsignale, wie z.B. haptische Signale, wie ein Rütteln am Lenkrad sind ebenfalls denkbar.

Vorzugsweise enthält der Sensor eine Kamera und/oder ein Mikrofon und/oder einen Funkempfänger. Der Sensor, insbesondere wenn eine Kamera verwendet wird, kann Teil eines Spiegelersatzsystems sein. Wenn der Sensor eine Kamera ist, kann die Verarbeitungseinheit z.B. durch Bildanalyse nach Verkehrsteilnehmern und bestimmten Eigenschaften dieser analysieren. Zum Beispiel kann die Verarbeitungseinheit nach dem Vorliegen von bestimmten Farben das Bild analysieren oder nach dem Vorliegen von bestimmten zeitlichen Farbfolgen, Intensitäten und/oder Helligkeiten innerhalb des Bilds. Insbesondere kann die zeitliche Abfolge der Intensität und oder Helligkeit in Signalen oder deren räumliche Verteilung analysiert werden.

Ein Funkempfänger ist dann besonders zuverlässig und ein einfaches Mittel, wenn die Einsatzfahrzeuge bzw. diejenigen Verkehrsteilnehmer, von denen das Vorliegen bestimmter Eigenschaften beobachtet wird, mit einem Sender ausgerüstet sind, der ein bestimmtes Funksignal als bestimmte Eigenschaft aussendet. Die Verwendung eines Funksignals hat gegenüber einem visuellen Signal, das der Sensor erfasst, den Vorteil, dass ebenso wie beim Tonsignal keine direkte Sicht auf den anderen Verkehrsteilnehmer vorhanden sein muss, 'bzw. die Eigenschaft aus einem Bild erkennbar sein muss, um ein Signal zu erfassen.

In einer besonders bevorzugten Ausführungsform sind mindestens zwei voneinander unabhängige, verschiedene Sensoren vorgesehen. Unabhängige, verschiedene Sensoren sind solche, die nicht durch das gleiche Gerät, z.B ein und dieselbe Kamera, gestaltet sind und die unabhängig voneinander betreibbar sind. Die mehreren Sensoren können gleichen oder unterschiedlichen Typs sein, d.h. es können zum Beispiel zwei Kameras als zwei Sensoren vorgesehen sein. Wenn die Sensoren gleichen Typs sind, d.h. z.B. mehrere Kameras oder z.B. mehrere Mikrofone, können die Sensoren als redundante Sensoren zur Verifikation der Erfassung von einem der Sensoren, oder als sich ergänzende Sensoren, zum Beispiel für unterschiedliche Bereiche der Fahrzeugumgebung, vorgesehen sein. Ferner kann durch mehrere unabhängige, redundante Sensoren die Ausfallwahrscheinlichkeit verringert werden. Wenn die Sensoren gleichen Typs sind, zum Beispiel mehrere Kameras, können es dennoch von der Bauart her verschiedene Kameras bzw. Sensoren sein, z.B. mehrere Kameras mit unterschiedlicher Auflösung.

Vorteilhafterweise sind die Sensoren unterschiedlichen Typs, d.h. der Sensor ist ein erster Sensor und das Warnsystem enthält einen zweiten Sensor, der ein von dem ersten Sensor verschiedener und von diesem unabhängiger Sensor ist. Verschiedene Sensoren bezeichnen Sensoren unterschiedlichen Typs, insbesondere im Hinblick auf die Art der erfassten Information, z.B. visuelle Information einerseits und akustische Information andererseits. Beide Sensoren geben die erfasste Information an die Verarbeitungseinheit. Zum Beispiel ist der erste Sensor eine Kamera und der zweite Sensor ein Funkempfänger oder ein Mikrofon. Wenn mittels des ersten Sensors von der Verarbeitungseinheit das Vorhandensein eines anderen Verkehrsteilnehmers mit einer bestimmten Eigenschaft erfasst wird, kann dies durch Analyse der Information von dem zweiten Sensor unabhängig verifiziert werden. In diesem Fall sind die mehreren Sensoren redundant, d.h. die mittels eines Sensors erfasste und analysierte Information wird durch die mittels eines anderen Sensors erfasste und analysierte Information überprüft und verifiziert. Die Verarbeitung der Daten von den beiden Sensoren muss dabei nicht sequentiell erfolgen, sondern kann auch parallel erfolgen. Wenn die Sensoren als redundante Sensoren vorgesehen sind, wird ein Warnsignal vorzugsweise nur dann ausgegeben, wenn beide Sensoren unabhängig voneinander das Vorliegen einer bestimmten Eigenschaft des anderen Verkehrsteilnehmers erkennen. Dadurch erhält das System eine erhöhte Zuverlässigkeit und Redundanz.

Alternativ können die Sensoren verschiedenen Typs ebenfalls als sich ergänzende Sensoren vorgesehen sein, z.B. wird eine Kamera für einen Bereich seitlich neben dem Fahrzeug und eine Kamera für den Bereich hinter dem Fahrzeug vorgesehen.

Grundsätzlich können der erste Sensor und der zweite Sensor Sensoren gleichen Typs, z.B. beide Kameras, sein. Dies ist insbesondere dann sinnvoll, wenn unterschiedliche Bereiche rund um das Fahrzeug mit den unterschiedlichen Sensoren beobachtet werden. Wenn derselbe Bereich der Fahrzeugumgebung durch die beiden oder mehreren Sensoren beobachtet wird, ist es bevorzugt, wenn die Sensoren unterschiedlichen Typs sind.

Sind mehrere redundante Sensoren vorgesehen, kann durch Vergleich der Analyseergebnisse beider oder mehrerer redundanter Sensoren eine Fehlfunktion eines Sensors erkannt werden. Eine solche Fehlfunktion, kann zum Beispiel bei Defekt eines der Sensoren dazu führen, dass zwei redundant vorgesehene Sensoren wiederholt zu abweichenden Analyseergebnissen führen. Eine solche mögliche Fehlfunktion kann dann dem Fahrzeugführer frühzeitig angezeigt werden, so dass er geeignete Maßnahmen, wie z.B. Reparatur einleiten kann, und weiß, dass er sich auf das System nur bedingt verlassen kann. So kann sichergestellt werden, dass das System funktional sicher nach z.B. ISO 26262 ist, was bedeutet, dass das System, bei Fehlfunktion in einen sicheren Zustand übergeht, wobei dieser bedingt, dass dem Fahrzeugführer kenntlich gemacht wird, dass eine Fehlfunktion vorliegt bzw. er sich auf betreffendes System nicht verlassen kann.

Werden mehrere Sensoren zur Überwachung von Eigenschaften verwendet werden, kann es sinnvoll sein, den Sensoren unterschiedlich zu vertrauen bzw. sie untereinander zu gewichten und die Ausgabe des Warnsignals abhängig davon zu machen, ob mit ausreichender Wahrscheinlichkeit (in Abhängigkeit von der Gewichtung der Sensoren) ein anderer Verkehrsteilnehmer mit einer bestimmten Eigenschaft in der Fahrzeugumgebung ist. Dabei kann die Gewichtung entweder fest eingestellt sein, oder ein Confidence Level der einzelnen Sensoren bei der Erzeugung der Warnung berechnet und dahingehend die mehreren Sensoren gewichtet werden. Wenn aufgrund der Ergebnisse eines Sensors keine Warnung ausgegeben werden würde, ein anderer Sensor allerdings eindeutig eine Eigenschaft eines anderen Verkehrsteilnehmers wahrnimmt, dass eine Warnung ausgegeben werden sollte, z.B. weil sich die Sensoren an unterschiedlichen Anbaupositionen am Fahrzeug befinden. Zusätzlich oder alternativ kann es hilfreich sein, verschiedenen Sensoren in unterschiedlichen Situationen oder aufgrund unterschiedlicher Datenlage unterschiedlich stark zu vertrauen. So kann es beispielsweise sein, dass bei zwei optischen Sensoren unterschiedlichen Typs bekannt ist, dass einer der Sensoren eine höhere Quanteneffizienz bei Wellenlängen im Infrarot besitzt. Bei beispielsweise der Erkennung von Halogen-Blaulichter, kann dem mit einem solchen Sensor erkannten Infrarotanteil eine höhere Zuverlässigkeit zugeordnet werden und eine Warnung ausgegeben werden, wenn der andere Sensor keinen Infrarotanteil detektiert.

Besonders bevorzugt ist die Verarbeitungseinheit angepasst, die Information im Hinblick auf das Vorhandensein von bestimmten Mustern in zeitlichen Verläufen der Eigenschaft der anderen Verkehrsteilnehmer zu analysieren. Zum Beispiel kann das Muster eine zeitlich vorgegebene Tonfrequenzfolge oder eine in zeitlichen Verlauf vorgegebene Lichtwellenlängenfolge sein. Z.B. wenn der Sensor eine Kamera ist, kann das Muster, das der bestimmten Eigenschaft entspricht, eine bestimmte Folge von erkannten Farben, die Blink- und Blitzimpulsen zuzuordnen sind, sein. Dies kann zusätzlich oder alternativ mit bestimmten zeitlichen Farbverläufen (Lichtwellenlängenverläufen) verbunden sein. Bei Bildanalyse können auch zeitliche Intensitätsverläufe, Helligkeitsverläufe oder Ähnliches, neben der Farbe an sich, herangezogen werden. Bei zeitlicher Beobachtung und Analyse kann der zeitliche Verlauf der Eigenschaft dahingehend analysiert und ausgewertet werden, wie sich eine Position der Lichtquelle zum Fahrzeug verändert.

Das Verfahren zum Warnen eines Fahrzeugführers enthält die Schritte:
Erfassen von Umgebungsinformation mit einem Sensor, wobei die Umgebungsinformation Information über bestimmte Eigenschaften anderer Verkehrsteilnehmer enthalten kann;
Verarbeiten der erfassten Umgebungsinformation mittels einer Verarbeitungseinheit, wobei das Verarbeiten das Analysieren der erfassten Umgebungsinformation, ob die Umgebungsinformation Information über andere Verkehrsteilnehmer aufweist, enthält;
falls die Umgebungsinformation Information über andere Verkehrsteilnehmer aufweist, Analysieren der Umgebungsinformation, ob eine bestimmte Eigenschaft oder bestimmte Eigenschaften der anderen Verkehrsteilnehmer vorliegen; und Ausgeben eines Warnsignals an den Fahrzeugführer des Fahrzeugs mittels einer Wiedergabeeinheit, wenn eine bestimmte Eigenschaft oder bestimmte Eigenschaften der anderen Verkehrsteilnehmer vorliegen.

Der Schritt des Analysierens der Umgebungsinformation dahingehend, ob diese Umgebungsinformation Information über andere Verkehrsteilnehmer aufweist, muss nicht als eigener, separater Schritt erfolgen, sondern kann zusammen mit dem Schritt des Analysierens im Hinblick auf eine bestimmte Eigenschaft des Verkehrsteilnehmers erfolgen, wenn diese Eigenschaft derart ist, dass sie gleichzeitig zwangsläufig den Rückschluss zulässt, dass sie einem anderen Verkehrsteilnehmer zuzuordnen ist. In diesem Fall wird gleichzeitig dadurch, dass die bestimmte Eigenschaft erkannt wird, auch erkannt, dass ein Verkehrsteilnehmer die Eigenschaft aufweist.

Bevorzugt enthält das Verfahren weiter enthaltend den Schritt des Verifizierens der Analyse, wenn bestimmt ist, dass bestimmte Eigenschaften der anderen Verkehrsteilnehmer vorliegen, durch Erfassen von Umgebungsinformation mit einem zweiten Sensor, der von dem ersten Sensor verschieden ist, Analysieren der mit dem zweiten Sensor erfassten Umgebungsinformation, ob die Umgebungsinformation Information über andere Verkehrsteilnehmer enthält und ob eine oder mehrere bestimmte Eigenschaften der anderen Verkehrsteilnehmer vorliegen.

Vorzugsweise wird das Warnsignal an den Fahrzeugführer nur dann ausgegeben, wenn der Schritt des Verifizierens ergibt, dass eine oder mehrere bestimmte Eigenschaften anderer Verkehrsteilnehmer vorliegen.

Nach einer bevorzugten Ausführungsform wird das Warnsignal ausgegeben, wenn die eine oder die mehreren bestimmten Eigenschaften während einer bestimmten Zeit vorliegen.

### Aspekte der Erfindung

1. Warnsystem (100) zum Warnen eines Fahrzeugführers, enthaltend
   einen Sensor (3a, 3b) zum Erfassen von Umgebungsinformation;
   eine Verarbeitungseinheit (4) zum Verarbeiten einer von dem Sensor erfassten Information; und
   eine Wiedergabeeinheit (5, 7, 8, 9) zum Ausgeben eines Warnsignals an den Fahrzeugführer (1) ;
   wobei der Sensor (3a, 3b) angepasst ist, Information über andere Verkehrsteilnehmer zu erfassen;
   die Verarbeitungseinheit (4) angepasst ist, die Information im Hinblick auf das Vorhandensein von einer oder mehreren bestimmten Eigenschaften der anderen Verkehrsteilnehmer zu analysieren, und ein Signal an die Wiedergabeeinheit (5) zum Ausgeben des Warnsignals auszugeben, wenn die Analyse das Vorliegen von bestimmten Eigenschaften anderer Verkehrsteilnehmer erkennt.
2. Warnsystem (100) nach Aspekt 1, wobei das Warnsystem (100) mit einem Spiegelersatzsystem eines Fahrzeugs gekoppelt ist, das ein Display zum Anzeigen von Fahrzeugumgebungsinformation an den Fahrzeugführer enthält, wobei die Fahrzeugumgebungsinformation Spiegelersatzinformation enthält, und die Wiedergabeeinheit (5) das Display enthält.
3. Warnsystem (100) nach Aspekt 2, wobei das Warnsignal eine grafische Darstellung auf dem Display enthält.
4. Warnsystem (100) nach einem der vorhergehenden Aspekte, wobei das Warnsignal ausgegeben wird, solange das Vorliegen der bestimmten Eigenschaft oder Eigenschaften anderer Verkehrsteilnehmer erkannt wird.
5. Warnsystem (100) nach einem der vorhergehenden Aspekte, wobei das Warnsignal erst nach Ablauf einer Zeitdauer ausgegeben wird, während welcher das Vorliegen der bestimmten Eigenschaft oder Eigenschaften durchgängig erkannt wird.
6. Warnsystem (100) nach einem der vorhergehenden Aspekte, wobei das Warnsignal ein akustisches Signal und/oder ein visuelles Signal ist.
7. Warnsystem (100) nach einem der vorhergehenden Aspekte, wobei der Sensor eine Kamera und/oder ein Mikrofon und/oder einen Funkempfänger enthält.
8. Warnsystem (100) nach einem der vorhergehenden Aspekte, wobei der Sensor ein erster Sensor (3a) ist, und das Warnsystem einen zweiten Sensor (3b) enthält, der ein von dem ersten Sensor verschiedener Sensor ist, der Information an die Verarbeitungseinheit ausgibt.
9. Warnsystem (100) nach Aspekt 8, wobei der erste Sensor (3a) und der zweite Sensor (3b) Sensoren unterschiedlichen Typs und/oder Bauart sind.
10. Warnsystem (100) nach einem der Aspekte 8 oder 9, wobei die Verarbeitungseinheit (4) angepasst ist, die Information des ersten Sensors (3a) und des zweiten Sensors (3b) im Hinblick auf das Vorhandensein von bestimmten Eigenschaften der anderen Verkehrsteilnehmer zu analysieren, und ein Signal an die Wiedergabeeinheit (5, 7, 8, 9) zum Ausgeben des Warnsignals auszugeben, wenn die Analyse der Information von dem ersten Sensor (3a) und/oder die Analyse der Information von dem zweiten Sensor (3b) jeweils das Vorliegen von bestimmten Eigenschaften anderer Verkehrsteilnehmer erkennt.
11. Warnsystem (100) nach einem der vorhergehenden Aspekte, wobei die Verarbeitungseinheit (4) angepasst ist, die Information im Hinblick auf das Vorhandensein von bestimmten Mustern in zeitlichen Verläufen der Eigenschaft oder Eigenschaften der anderen Verkehrsteilnehmer zu analysieren.
12. Warnsystem (100) nach Aspekt 11, wobei die Muster Tonfolgen oder Frequenzfolgen eines Tonsignals sind.
13. Warnsystem (100) nach Aspekt 11, wobei die Muster bestimmte räumliche und/oder zeitliche Abfolgen von Helligkeitswerten und/oder Wellenlängen in visuellen Signalen sind.
14. Warnsystem (100) nach einem der vorhergehenden Aspekte, weiter enthaltend ein Fahrerassistenzsystem (11), wobei die Verarbeitungseinheit (4) angepasst ist ein Signal an das Fahrerassistenzsystem (11) auszugeben, wenn die Analyse das Vorliegen von bestimmten Eigenschaften anderer Verkehrsteilnehmer erkennt.
15. Verfahren zum Warnen eines Fahrzeugführers, enthaltend die Schritte:
   Erfassen von Umgebungsinformation mit einem Sensor, wobei die Umgebungsinformation Information über bestimmte Merkmale anderer Verkehrsteilnehmer enthalten kann;
   Verarbeiten der erfassten Umgebungsinformation mittels einer Verarbeitungseinheit, wobei das Verarbeiten das Analysieren der erfassten Umgebungsinformation, ob die Umgebungsinformation Information über andere Verkehrsteilnehmer aufweist, enthält;
   Analysieren der Umgebungsinformation, ob eine oder mehrere bestimmte Eigenschaften der anderen Verkehrsteilnehmer vorliegen; und
   Ausgeben eines Warnsignals an den Fahrzeugführer des Fahrzeugs mittels einer Wiedergabeeinheit, wenn die eine oder die mehreren bestimmten Eigenschaften der anderen Verkehrsteilnehmer vorliegen.
16. Verfahren nach Aspekt 15, weiter enthaltend den Schritt des Verifizierens der Analyse, wenn bestimmt ist, dass eine oder mehrere bestimmte Eigenschaften der anderen Verkehrsteilnehmer vorliegen, durch
   Erfassen von Umgebungsinformation mit einem zweiten Sensor, der von dem ersten Sensor verschieden ist,
   Analysieren der mit dem zweiten Sensor erfassten Umgebungsinformation, ob die Umgebungsinformation Information über andere Verkehrsteilnehmer enthält und ob eine oder mehrere bestimmte Eigenschaften der anderen Verkehrsteilnehmer vorliegen.
17. Verfahren nach Aspekt 16, wobei das Warnsignal an den Fahrzeugführer nur dann ausgegeben wird, wenn der Schritt des Verifizierens ergibt, dass eine oder mehrere bestimmte Eigenschaften anderer Verkehrsteilnehmer vorliegen.
18. Verfahren nach einem der Aspekte 15 bis 17, wobei das Warnsignal ausgegeben wird, wenn die eine oder mehreren bestimmten Eigenschaften während einer bestimmten Zeit vorliegen.
19. Verfahren nach einem der Aspekte 15 bis 18, wobei das Warnsignal so lange ausgegeben wird, bis ein Drivermonitoringsystem erkennt, dass der Fahrzeugführer das Warnsignal wahrgenommen hat.

### Kurze Beschreibung der Figuren

Nachfolgend wird die Erfindung rein beispielhaft an Hand der beigefügten Figuren beschrieben.
- Fig. 1: zeigt schematisch den Aufbau eines Warnsystems gemäß einer Ausführungsform der Erfindung;
- Fig. 2a: zeigt ein Fahrzeug in Seitenansicht, das mit einem Warnsystem gemäß einer Ausführungsform der Erfindung ausgerüstet ist;
- Fig. 2b: zeigt das Fahrzeug aus Fig. 2a in Draufsicht;
- Fig. 3a: zeigt ein Fahrzeug aus Fig. 2a, 2b in einer Fahrtumgebung in Seitenansicht;
- Fig. 3b: zeigt das Fahrzeug aus Fig. 3a in der Fahrtumgebung in Draufsicht;
- Fig. 4: zeigt schematisch eine Fahrerkabine eines mit einem Warnsystem gemäß der Erfindung ausgerüsteten Fahrzeugs;
- Fig. 5: zeigt schematisch die Ausgabe eines Warnsignals gemäß einer Ausführungsform auf einer Wiedergabeeinheit;
- Fig. 6: zeigt schematisch die Ausgabe eines Warnsignals gemäß einer weiteren Ausführungsform auf einer Wiedergabeeinheit; und
- Fig. 7: zeigt ein Flussdiagramm zum Veranschaulichen der Erfindung.

### Beschreibung bevorzugter Ausführungsformen

Bevorzugte Ausführungsformen werden nachfolgend unter Verweis auf die beigefügten Figuren beschrieben.

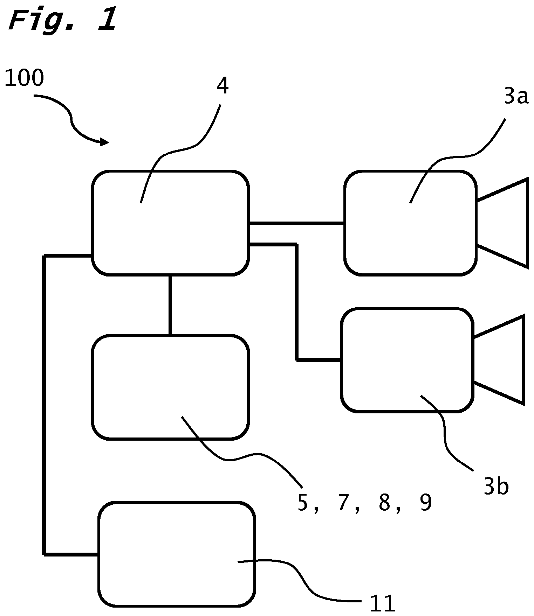

Figur 1 zeigt schematisch ein Warnsystem (100) gemäß einer Ausführungsform der Erfindung. Das Warnsystem (100) enthält einen ersten Sensor (3a) und einen zweiten, vom ersten Sensor (3a) unabhängigen Sensor (3b). Beide Sensoren (3a, 3b) erfassen unabhängig voneinander Umgebungsinformation rund um ein Fahrzeug (2).

Die Sensoren (3a, 3b) können jeweils beispielsweise eine Kamera, ein Funkempfänger oder ein Mikrofon sein. Es ist bevorzugt, dass im Falle, dass zwei Sensoren (3a, 3b) wie in der dargestellten Ausführungsform vorgesehen sind, diese Sensoren von einem unterschiedlichen Typ sind, d.h. zum Beispiel einer der Sensoren (3a) eine Kamera ist und der andere der Sensoren (3b) ein Mikrofon ist. Grundsätzlich kann eine beliebige Anzahl an Sensoren, d.h. auch mehr als zwei Sensoren oder auch nur ein Sensor vorgesehen sein. Z.B. können verschiedene Sensoren auf unterschiedliche Bereiche der Fahrzeugumgebung gerichtet sein. Die Anordnung der Sensoren am Fahrzeug, insbesondere ob diese an einer oder mehreren Positionen am Fahrzeug angeordnet sind, ist beliebig.

Mit den Sensoren (3a, 3b) ist eine Verarbeitungseinheit (4) gekoppelt, an die die Sensoren (3a, 3b) die von Ihnen erfasste Information zur Verarbeitung, insbesondere Analyse, weitergeben.

Die Verarbeitungseinheit (4) ist angepasst, die von den Sensoren (3a, 3b) empfangene Umgebungsinformation zu analysieren, ob sich in der erfassten Fahrzeugumgebung Verkehrsteilnehmer mit einer oder mehreren bestimmten Eigenschaften befinden.

Damit das Warnsystem (100) ein Warnsignal an einen Fahrzeugführer (1) ausgeben kann, ist das Warnsystem (100) ferner mit einer oder mehreren Wiedergabeeinheiten (5, 7, 8, 9) versehen. Die Wiedergabeeinheiten (5, 7, 8, 9) können beispielsweise Displays, Lautsprecher, ein Head-up Display, ein Fahrzeug-Multi-Media-System oder ähnliches sein.

Die Verarbeitungseinheit (4) ist ferner in der dargestellten Ausführungsform mit einem Fahrerassistenzsystem (11) gekoppelt und kann an dieses ebenfalls Signale ausgeben, so dass das Fahrerassistenzsystem (11) geeignete Maßnahmen, wie eine Langsamfahrt beispielsweise, ergreifen oder vorschlagen kann.

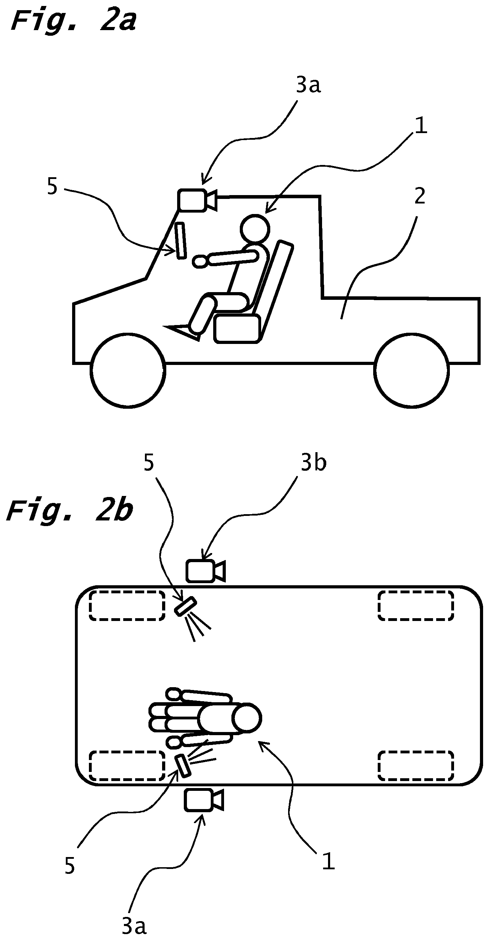

Figuren 2a und 2b zeigen in Seitenansicht bzw. Draufsicht ein Fahrzeug (2), das mit einem Warnsystem (100) in einer weiteren Ausführungsform ausgerüstet ist. Hier ist beidseitig des Fahrzeugs jeweils ein erster Sensor (3a) vorgesehen, z.B. als Kamera jeweils, wobei mit jedem der Sensoren (3a) unterschiedliche Bereiche um das Fahrzeug erfasste werden können, die jeweils im Hinblick auf das Vorliegen der gleichen Eigenschaften, z.B. Lichtwellenlängen, analysiert werden können.

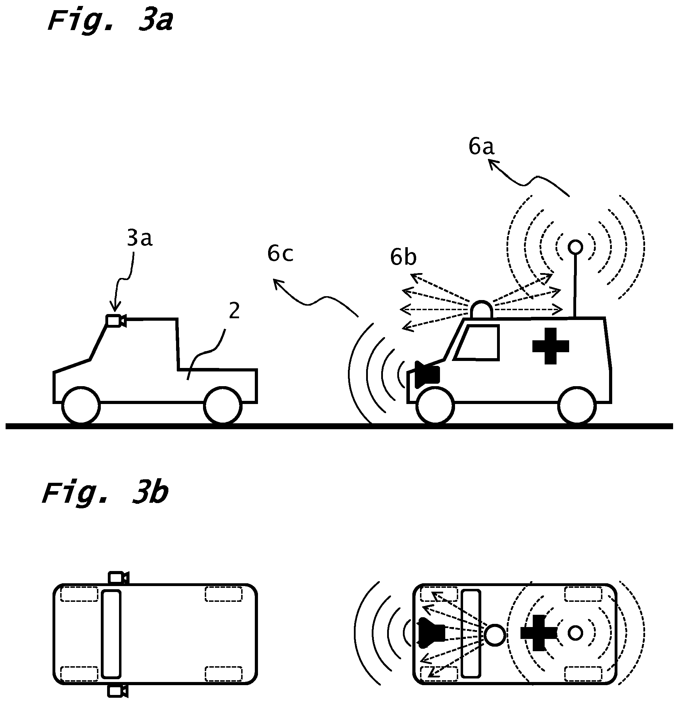

Figuren 3a und 3b zeigen in Seitenansicht exemplarisch ein Fahrzeug (2) entsprechend dem in Figuren 2a und 2b dargestellten Fahrzeug, in dessen rückwärtigem Bereich sich ein Einsatzfahrzeug, z.B. ein Rettungsfahrzeug, befindet, das, wenn es im Einsatz ist, bestimmte Signale aussendet, welche von einem am Fahrzeug (2) angebrachten Sensor (3a) erfasst werden können. In Figuren 3a und 3b ist dargestellte, dass das Rettungsfahrzeug akustische Umgebungsinformation (6c), optische Umgebungsinformation (6b) und Funkwellen (6a) als Umgebungsinformation aussendet. Es ist selbstverständlich möglich, dass das Rettungsfahrzeug alle verschiedenen Arten von Umgebungsinformation gleichzeitig aussendet, oder aber nur einen Teil davon, z.B. nur Blaulicht (optische Umgebungsinformation (6b)) und Martinshornsignale (akustische Umgebungsinformation (6c)).

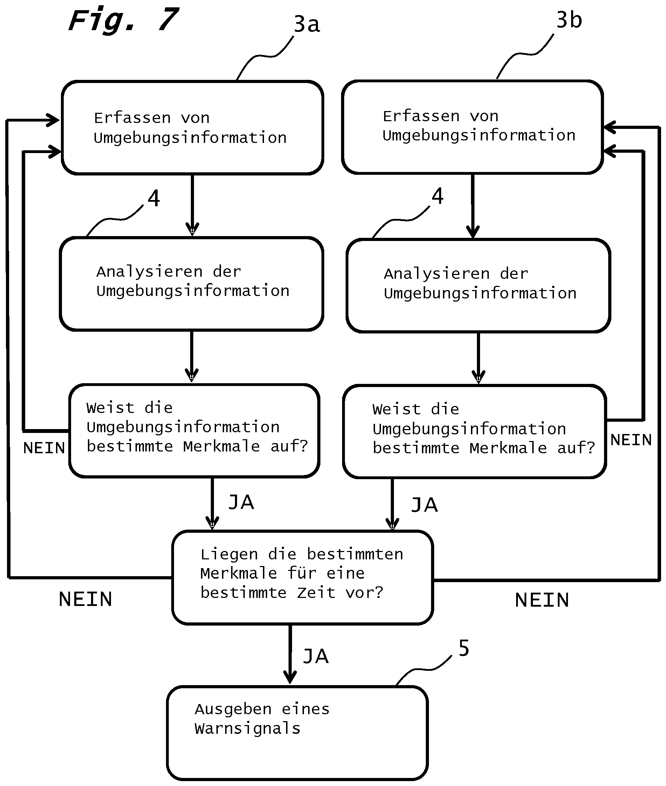

In Figur 7 ist mittels eines Flussdiagramms für die in Figur 1 gezeigte Ausführungsform schematisch dargestellt, wie das Warnsystem (100) arbeitet, d.h. wie das Verfahren zum Warnen eines Fahrzeugführers in einer Ausführungsform abläuft. Die in Figur 7 gezeigten Schritte werden dabei kontinuierlich wiederholt.

Wenn mittels der Sensoren (3a, 3b) Umgebungsinformation erfasst wird, wird diese jeweils in der Verarbeitungseinheit (4) analysiert. Dabei wird erfasst, ob die Umgebungsinformation Information dahingehend enthält, dass sich ein anderer Verkehrsteilnehmer in der Fahrzeugumgebung befindet. Wenn dies der Fall ist bzw. gleichzeitig zu dieser Analyse oder mit dieser einhergehend, wird die Information dahingehend analysiert, ob die Umgebungsinformation ein oder mehrere bestimmte Merkmale, die beispielsweise auf ein Einsatz- oder Rettungsfahrzeug im Einsatz hinweisen, enthält. Wenn die Umgebungsinformation mittels eines optischen Sensors (3a, 3b) erfasst wird, kann dies beispielsweise eine Analyse dahingehend sein, ob der Verkehrsteilnehmer ein Warnlicht (Blaulicht) angeschaltet hat. Dies kann z.B. durch Bildanalyse nach Farben oder zeitlich sequentiellen Farbmustern, durch Analyse der erfassten Lichtwellenlängen und/oder deren Muster geschehen. Wenn die Umgebungsinformation zum Beispiel mittels eines Mikrofons (akustisch) erfasst wird und als akustische Information vorliegt, kann eine Frequenzanalyse Töne oder Tonfolgen, die auf eine Einsatzfahrzeugs Sirene (Martinshorn) hindeuten, ermitteln.

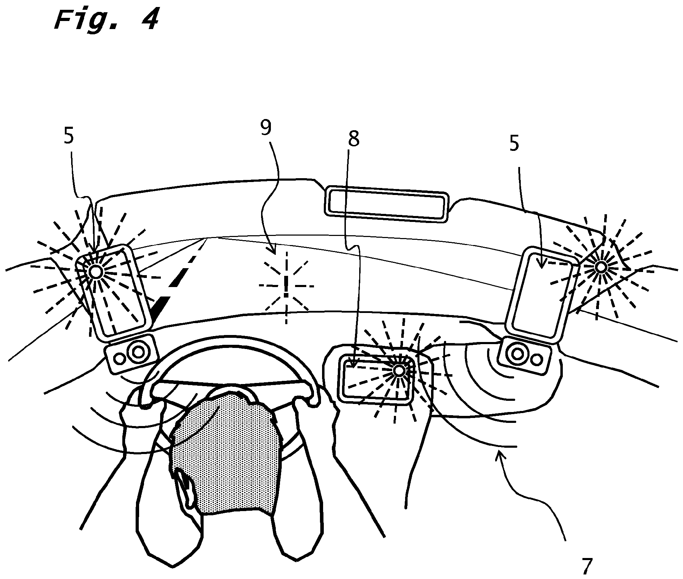

Wenn die Verarbeitungseinheit (4) bestimmt, dass ein oder mehrere bestimmte Merkmale vorliegen, gibt sie an eine Wiedergabeeinheit (wird in Verbindung mit Fig. 4 bis 6 beschrieben) ein Signal aus, dass diese ein Warnsignal an einen Fahrzeugführer ausgibt.

In der in Figur 7 dargestellten Ausführungsform wird das Signal nicht unmittelbar, sobald es erstmals auftritt, ausgegeben, sondern erst, wenn es eine bestimmte Zeit vorliegt. Solange werden das Verfahren und die beschriebenen Schritte wiederholt. Erst wenn die eine bestimmte Eigenschaft oder die mehreren bestimmten Eigenschaften während einer bestimmten Zeitdauer vorliegen, wird das Signal an den Fahrzeugführer ausgegeben, um zu vermeiden, dass nicht benötigte Warnsignale, wie z.B. ein im Heck des Fahrzeugs kreuzendes Einsatzfahrzeug, an den Fahrzeugführer ausgegeben werden.

In der in Figur 7 dargestellten Ausführungsform wird die Umgebungsinformation ferner redundant von zwei verschiedenen Sensoren (3a, 3b) erfasst und von der Verarbeitungseinheit (4) jeweils unabhängig analysiert. Erst wenn die Umgebungsinformation von beiden Sensoren (3a, 3b) auf das Vorhandensein bestimmter Eigenschaften des anderen Verkehrsteilnehmers schließen lässt, wird das Warnsignal ausgegeben. Dies stellt ebenfalls sicher, dass es nicht unnötige Warnungen des Fahrzeugführers gibt.

In Figuren 4 bis 6 sind in verschiedene Ausführungsformen für eine Wiedergabeeinheit und für Warnsignale schematisch gezeigt.

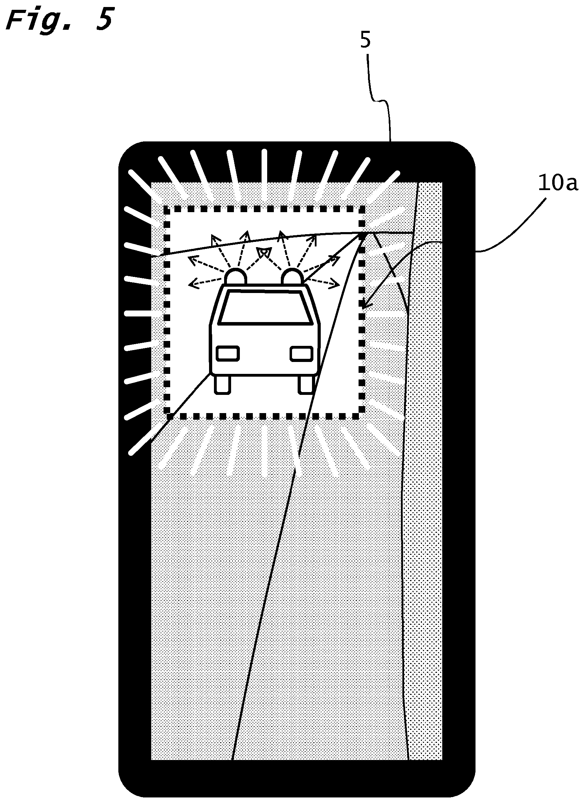

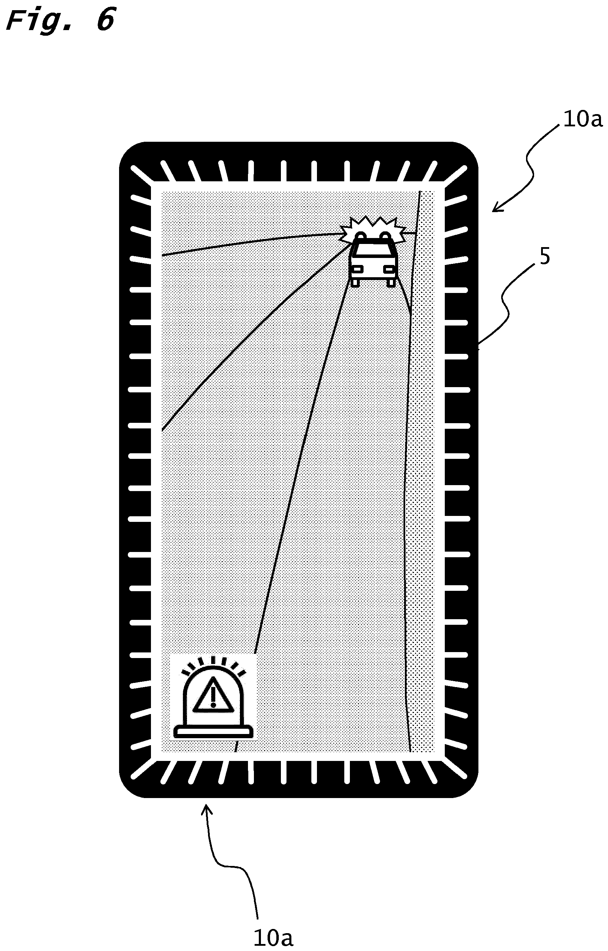

Figur 4 zeigt eine Fahrerkabine mit einem linken und einen rechten Display (5), auf denen zum Beispiel jeweils Spiegelersatzinformation gezeigt wird. Wenn ein Warnsignal ausgegeben werden soll, kann dies z.B. durch Einblenden eines entsprechenden Overlays (10a) als visuelles Warnsignal auf dem Display (5) erfolgen (Figur 5), oder indem beispielsweise der Rahmen des Displays (5) blinkend oder anderweitig hervorgehoben wird und/oder ein Symbol als visuelles Signal (10a) eingeblendet wird (Figur 6).

Alternativ oder zusätzlich kann, wie in Figur 4 angedeutet, eine akustische Warnung mittels einer Multi-Media-Einrichtung (8) des Fahrzeugs erfolgen, zum Beispiel durch Ausgabe eines speziellen Tons, z.B. Piepton, oder durch Dämpfen der Lautstärke der Tonausgabe der Multi-Media-Einrichtung (8). Auch ein separater, dedizierter Lautsprecher (7) als Wiedergabeeinheit für Warntöne, z.B. Warntöne aller Art, ist möglich.

Eine weitere in Figur4 dargestellte Möglichkeit ist das Einblenden von visueller Warninformation in einem Head-Up-Display (9).

Mit dem beschriebenen Warnsystem (100) und dem Verfahren zum Warnen eines Fahrzeugführers kann ein Fahrzeugführer zuverlässig frühzeitig und rechtzeitig informiert werden, wenn ein Einsatzfahrzeug sich in seiner Fahrzeugumgebung befindet, auch wenn stark auf beispielsweise den Straßenverkehr konzentriert ist.

Es wird explizit betont, dass alle in der Beschreibung und/oder den Ansprüchen offenbarten Merkmale als getrennt und unabhängig voneinander zum Zweck der ursprünglichen Offenbarung ebenso wie um Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste:

- 1: Fahrzeugführer
- 2: Fahrzeug
- 3a, 3b: Sensor
- 4: Verarbeitungseinheit
- 5: Wiedergabeeinheit (Display)
- 6a, 6b, 6c: Umgebungsinformation (Funk, visuell, akustisch)
- 7: Wiedergabeeinheit (Lautsprecher)
- 8: Wiedergabeeinheit (Multi-Media Einrichtung)
- 9: Wiedergabeeinheit (Head-Up Display)
- 10a: Warnsignal (visuell)
- 11: Fahrerassistenzsystem
- 100: Warnsystem

## Patentansprüche

1. Warnsystem (100) zum Warnen eines Fahrzeugführers, enthaltend
einen Sensor (3a, 3b) zum Erfassen von Umgebungsinformation;
eine Verarbeitungseinheit (4) zum Verarbeiten einer von dem Sensor erfassten Information; und
eine Wiedergabeeinheit (5, 7, 8, 9) zum Ausgeben eines Warnsignals an den Fahrzeugführer (1) ;
wobei der Sensor (3a, 3b) angepasst ist, Information über andere Verkehrsteilnehmer zu erfassen;
die Verarbeitungseinheit (4) angepasst ist, die Information im Hinblick auf das Vorhandensein von einer oder mehreren bestimmten Eigenschaften der anderen Verkehrsteilnehmer zu analysieren, und ein Signal an die Wiedergabeeinheit (5) zum Ausgeben des Warnsignals auszugeben, wenn die Analyse das Vorliegen von bestimmten Eigenschaften anderer Verkehrsteilnehmer erkennt.

2. Warnsystem (100) nach einem der vorhergehenden Ansprüche, wobei das Warnsystem (100) mit einem Spiegelersatzsystem eines Fahrzeugs gekoppelt ist, das ein Display zum Anzeigen von Fahrzeugumgebungsinformation an den Fahrzeugführer enthält, wobei die Fahrzeugumgebungsinformation Spiegelersatzinformation enthält, und die Wiedergabeeinheit (5) das Display enthält.

3. Warnsystem (100) nach Anspruch 2, wobei das Warnsignal eine grafische Darstellung auf dem Display enthält.

4. Warnsystem (100) nach einem der vorhergehenden Ansprüche, wobei das Warnsignal ausgegeben wird, solange das Vorliegen der bestimmten Eigenschaft oder Eigenschaften anderer Verkehrsteilnehmer erkannt wird, und/oder wobei das Warnsignal erst nach Ablauf einer Zeitdauer ausgegeben wird, während welcher das Vorliegen der bestimmten Eigenschaft oder Eigenschaften durchgängig erkannt wird, und/oder wobei das Warnsignal ein akustisches Signal und/oder ein visuelles Signal ist, und/oder wobei der Sensor eine Kamera und/oder ein Mikrofon und/oder einen Funkempfänger enthält.

5. Warnsystem (100) nach einem der vorhergehenden Ansprüche, wobei der Sensor ein erster Sensor (3a) ist, und das Warnsystem einen zweiten Sensor (3b) enthält, der ein von dem ersten Sensor verschiedener Sensor ist, der Information an die Verarbeitungseinheit ausgibt.

6. Warnsystem (100) nach Anspruch 5, wobei der erste Sensor (3a) und der zweite Sensor (3b) Sensoren unterschiedlichen Typs und/oder Bauart sind.

7. Warnsystem (100) nach einem der Ansprüche 5 oder 6, wobei die Verarbeitungseinheit (4) angepasst ist, die Information des ersten Sensors (3a) und des zweiten Sensors (3b) im Hinblick auf das Vorhandensein von bestimmten Eigenschaften der anderen Verkehrsteilnehmer zu analysieren, und ein Signal an die Wiedergabeeinheit (5, 7, 8, 9) zum Ausgeben des Warnsignals auszugeben, wenn die Analyse der Information von dem ersten Sensor (3a) und/oder die Analyse der Information von dem zweiten Sensor (3b) jeweils das Vorliegen von bestimmten Eigenschaften anderer Verkehrsteilnehmer erkennt.

8. Warnsystem (100) nach einem der vorhergehenden Ansprüche, wobei die Verarbeitungseinheit (4) angepasst ist, die Information im Hinblick auf das Vorhandensein von bestimmten Mustern in zeitlichen Verläufen der Eigenschaft oder Eigenschaften der anderen Verkehrsteilnehmer zu analysieren.

9. Warnsystem (100) nach Anspruch 8, wobei die Muster Tonfolgen oder Frequenzfolgen eines Tonsignals sind, oder wobei die Muster bestimmte räumliche und/oder zeitliche Abfolgen von Helligkeitswerten und/oder Wellenlängen in visuellen Signalen sind.

10. Warnsystem (100) nach einem der vorhergehenden Ansprüche, weiter enthaltend ein Fahrerassistenzsystem (11), wobei die Verarbeitungseinheit (4) angepasst ist ein Signal an das Fahrerassistenzsystem (11) auszugeben, wenn die Analyse das Vorliegen von bestimmten Eigenschaften anderer Verkehrsteilnehmer erkennt.

11. Verfahren zum Warnen eines Fahrzeugführers, enthaltend die Schritte:
Erfassen von Umgebungsinformation mit einem Sensor, wobei die Umgebungsinformation Information über bestimmte Merkmale anderer Verkehrsteilnehmer enthalten kann;
Verarbeiten der erfassten Umgebungsinformation mittels einer Verarbeitungseinheit, wobei das Verarbeiten das Analysieren der erfassten Umgebungsinformation, ob die Umgebungsinformation Information über andere Verkehrsteilnehmer aufweist, enthält;
Analysieren der Umgebungsinformation, ob eine oder mehrere bestimmte Eigenschaften der anderen Verkehrsteilnehmer vorliegen; und
Ausgeben eines Warnsignals an den Fahrzeugführer des Fahrzeugs mittels einer Wiedergabeeinheit, wenn die eine oder die mehreren bestimmten Eigenschaften der anderen Verkehrsteilnehmer vorliegen.

12. Verfahren nach Anspruch 11, weiter enthaltend den Schritt des Verifizierens der Analyse, wenn bestimmt ist, dass eine oder mehrere bestimmte Eigenschaften der anderen Verkehrsteilnehmer vorliegen, durch
Erfassen von Umgebungsinformation mit einem zweiten Sensor, der von dem ersten Sensor verschieden ist,
Analysieren der mit dem zweiten Sensor erfassten Umgebungsinformation, ob die Umgebungsinformation Information über andere Verkehrsteilnehmer enthält und ob eine oder mehrere bestimmte Eigenschaften der anderen Verkehrsteilnehmer vorliegen.

13. Verfahren nach Anspruch 12, wobei das Warnsignal an den Fahrzeugführer nur dann ausgegeben wird, wenn der Schritt des Verifizierens ergibt, dass eine oder mehrere bestimmte Eigenschaften anderer Verkehrsteilnehmer vorliegen.

14. Verfahren nach einem der Ansprüche 11 bis 13, wobei das Warnsignal ausgegeben wird, wenn die eine oder mehreren bestimmten Eigenschaften während einer bestimmten Zeit vorliegen.

15. Verfahren nach einem der Ansprüche 11 bis 14, wobei das Warnsignal so lange ausgegeben wird, bis ein Drivermonitoringsystem erkennt, dass der Fahrzeugführer das Warnsignal wahrgenommen hat.
